# EUROPEAN PATENT APPLICATION

(11) **EP 4 219 866 A1**
(43) Date of publication of application: **02.08.2023**
(21) Application number: 21872265.0
(22) Date of filing: 14.09.2021
(51) Int. Cl.: E04H 3/02, G06Q 30/06, G06Q 50/16

(54) **STORE ARRANGEMENT STRUCTURE IN COMMERCIAL BUILDING**

(30) Priority: 27.09.2020 JP 2020161553
(71) Applicant: Land Business Co., Ltd., Chiyoda-ku, Tokyo 100-6030 (JP)
(72) Inventor: KAMEI, Masamichi, Tokyo 153-0062 (JP)
(74) Representative: TBK
(86) International application number: PCT/JP2021/033733
(87) International publication number: WO 2022/065135

(57) **Abstract**

The present invention provides a store arrangement structure in a commercial building with which it is possible to combine the concept of a secondary store for a primary store in regards to stores in a commercial building, thereby making it possible to impart high added value to the entire building. Secondary stores a to n of each brand shop are arranged on a main floor which has front entrances 2 serving as entrances/exits, and primary stores A to N of each brand shop corresponding to the secondary stores a to n are arranged on the second to eighth floors of a building 1, thereby allowing shoppers who come in from the entrances 2 on the main floor to look around at the secondary stores a to n of each brand arranged on the main floor along a passage 3. If the shopper is interested in one product which is for sale at the secondary stores a to n, it may be possible for the shopper to purchase this product on the spot, and if the shopper wants to browse more products of that brand, it is made possible for the shopper to use an elevator 5 or stairs 6, for instance, from the main floor in order to visit the primary stores A to N of that brand on the upper floors for shopping thereat.

## Description

### TECHNICAL FIELD

This invention relates to a store arrangement structure in a commercial building where there are a lot of brand shops of fashion, cosmetic, bag and shoes brands and/or stores for sales of national and/or local specialty products, for instance.

### BACKGROUND ARTS

In regards to a commercial building where a lot of brand shops of fashion and cosmetic brands, for instance, are located together, it is commonly accepted that the rent of tenants on a main floor which has entrances/exits for general shoppers and is able to greatly attract the shoppers shall be set high in general, whereas the rent of tenants on the floors other than the main floor shall be kept low because of their locational inferiority such as to cause a decline in the ability to attract the shoppers, for instance.

Usually, while the tenants of well-known or high-end brands are occupying such main floor that is excellent in the ability to attract the shoppers, the tenants of other brands and/or start-up brands have no choice but to be located on the floors other than the main floor. For that reason, the reality is that each tenant store on the floors other than the main floor has quite difficulty in popularizing one's brand value enough to increase the ability to attract the shoppers, even though carrying products of high quality.

Meanwhile, from the point of view of a commercial building owner, the owner can receive the high rent from the tenants of well-known brands on the main floor, but on the other hand, cannot avoid setting the rent low for the tenants on the floors other than the main floor in accordance with the difference in the ability to attract the shoppers depending on the floors, in cases of looking for tenants, for instance.

Further, in the event of moving-out of the tenant of well-known brand on the main floor, there is no guarantee that the resultant vacant tenant space will be quickly filled by a new tenant, despite that the rent is high.

For instance, the following inventions disclosed in patent documents 1 and 2 below are heretofore known as one technology to enhance efficiency in marketing activities.

In relation to an operation support system of an antenna shop serving as a branch shop aimed at test marketing of new products, the patent document 1 discloses an antenna shop operation support system which comprises an attribute information input means placed in an antenna shop to input consumer attribute information in association with new products which are being displayed therein, an evaluation information input means placed in the antenna shop to input consumer evaluation information with respect to the new products, a storage means into which the attribute information and the evaluation information respectively inputted for each displayed new product are stored in association with each other, a data analysis means for generating analysis data by analyzing the attribute information and the evaluation information respectively stored in the storage means, and a transmission means for transmitting the analysis data to an external device via a communication means.

For the purpose of enabling the efficient operation of an antenna shop in consideration for saving of the cost to open the antenna shop when a minor local government attempts to open the antenna shop aimed at researches on the trend of sales of products in a particular district, the patent document 2 discloses a building operation system with which, with respect to an offer from a local government to the effect that use of a building having both of an office space for use as a tenant office and a product selling space is requested, it is possible for more than one tenant to use more than one building in an efficient and equitable manner, and a certain rack space of a product display rack installed in the product selling space is allocated to occupants as each tenant so as to enable the occupants to carry out marketing activities with the products displayed in the allocated rack space.

In relation to an elevator system having a registering function for registering of a tenancy floor in a commercial building as a destination floor, a patent document 3 below discloses an elevator system with which, upon customer's operation of depressing a tenant designation button indicative of a tenant that customers are going to visit, among more than one tenant designation button provided on an operation panel, a notification of the completion of tenant designation is given by voice or by character information displayed on a display screen so as to enable a tenant side to predict, by this notification, that the customers will visit here soon after.

A patent document 4 below discloses a store guidance information display method wherein a display system for displaying store guidance information of each tenancy-agreement concluded store in a tenant building where there are a variety of restaurants is provided close to an entrance on the first floor of the tenant building, thereby enabling customers to get to know the ambience in each store by means of display of a video image captured to show the ambience in each store on a monitor of the display system, for instance.

A patent document 5 below discloses a system configured such that a customer-operable entrance-side terminal is provided at an entrance of a facility, wherein the guidance of current availability of stores on each floor is performed by the entrance-side terminal, and besides, communication with each store on an intercommunication system is capable of being made via the entrance-side terminal.

### PRIOR ART DOCUMENTS

### PATENT DOCUMENTS

Patent document 1: Japanese Unexamined Patent Application Publication No. 2002-334198
Patent document 2: Japanese Unexamined Patent Application Publication No. 2013-080478
Patent document 3: Japanese Unexamined Patent Application Publication No. 2003-292259
Patent document 4: Japanese Unexamined Patent Application Publication No. 2007-133338
Patent document 5: Japanese Unexamined Patent Application Publication No. 2008-250595

### SUMMARY OF THE INVENTION

### PROBLEMS TO BE SOLVED BY THE INVENTION

In regards to the systems as disclosed in the above patent documents 1 and 2, so-called "antenna shop" as described therein is a branch shop aimed at test marketing of new products in specified enterprises and/or local products offered by local governments, and accordingly, it is to be understood that these systems are not construed as an invention that relates to the arrangement of stores such as each brand shop in a commercial building.

The store guidance information display method as disclosed in the above patent document 4 is to enable the customers to get to know the ambience in the stores on each floor by means of display of the video image on the monitor, for instance, in which case, however, information given is limited to video image information, and accordingly, it is to be understood that this method is neither to enable the shoppers to directly touch or see the products being for sale at the stores such as each brand shop in the commercial building, nor to eliminate locational superiority or inferiority in the store arrangement in the commercial building.

The system as disclosed in the above patent document 5 is configured such as to merely have a guiding function for guidance of the current availability of the stores on each floor and an communication function for communication with each store on the intercommunication system, and accordingly, it is also to be understood that this system is neither to enable the shoppers to directly touch or see the products being for sale at the stores such as each brand shop, nor to eliminate locational superiority or inferiority in the store arrangement.

The present invention relates to the arrangement of stores such as each brand shop in a commercial building and is to provide a store arrangement structure in a commercial building with which it is possible to combine the concept of a secondary store for a primary store in regards to stores in the commercial building, thereby making it possible to impart high added value to the entire building, while allowing an antenna shop-like function to be adopted as a part of secondary store functions.

### MEANS FOR SOLVING THE PROBLEMS

A store arrangement structure in a commercial building according to the present invention is characterized in that in regards to more than one tenant in a commercial building with more than one floor, primary stores are arranged in combination with secondary stores serving as branch shops aimed at introduction on the primary stores while being displaying or selling some of products which are for sale at the primary stores, wherein the secondary stores are provided in centralized arrangement on a main floor having entrances/exits mainly for customers, while the primary stores are provided in decentralized arrangement on more than one floor of the commercial building.

Specifically, when assuming most simply that there are ten brand shops as tenants in a building, provided that the first floor of the building is assumed to be the main floor thereof, for instance, there may be a case where the primary stores of each brand shop are provided in decentralized arrangement on the second and more floors, while the secondary stores of each brand shop are arranged on the first floor assumed to be the main floor.

In this case, shoppers who come in from front entrances serving as the entrances/exits on the main floor can directly look around at the secondary stores of each brand arranged on the main floor. Therefore, if one shopper is interested in some product which is for sale at the secondary stores, it may be possible for the shopper to purchase this product on the spot, and meanwhile, if one shopper wants to browse more products of that brand, it is made possible for the shopper to use an elevator, an escalator or stairs, for instance, from the main floor in order to visit the primary stores of that brand on the upper floors for shopping thereat.

The secondary stores are to function like a branch shop or an antenna shop mainly aimed at introduction on the primary stores, and shall be applicable to not only introduction on the primary stores but also sales of some of the products which are for sale at the primary stores, within the limit of spatial allowance.

Further, a function as a showroom can be also imparted to the secondary stores in such a manner as to pick out some kinds of products available as featured products from the products being for sale at the primary stores in order to display these featured products in the secondary stores. Moreover, the secondary stores are capable of allowing the customers attracted to the displayed products to be inspired for a visit to the primary stores.

In principle, the primary stores can be all provided in decentralized arrangement on the floors other than the main floor, that is, on the upper floors of the main floor or on the lower floors inclusive of a basement floor. However, it is to be noted that any arrangement of the primary stores of some of the tenants on the main floor shall not be always precluded. Further, coffee shops and/or restaurants, for instance, may be appropriately arranged also on the main and other floors so as to allow the customers to stop by thereat in-between shopping.

The secondary stores of each tenant can be provided with a contact means dedicated to contact with the primary stores corresponding to the relevant secondary stores or a guiding means dedicated to guidance to the primary stores corresponding to the relevant secondary stores.

For instance, in response to a customer's request, if any, it may be possible for the secondary stores to make contact with the corresponding primary stores or guide the customers to the corresponding primary stores. For contact with the primary stores, use may be made of a dedicated communication means.

When it is necessary to impose limitation on the number of customers who are going to visit the primary stores, the secondary stores can take measures such as to give out tickets for admission to the primary stores or cards available for an operation of guiding an elevator so as to go to the floor on which the primary stores are located, by use of an elevator access control system utilizing an IC card, for instance.

In one aspect of the store arrangement structure in the commercial building according to the present invention, the brand shops as the tenants in the commercial building can be also limited to stores that are specializing in products in one to three particular categories such as clothes, bags, shoes and cosmetics, for instance. However, even in such case, it is to be noted that any appropriate arrangement of the coffee shops and/or restaurants as described the above, for instance, shall not be precluded.

If the stores in the particular categories are provided in centralized arrangement in one commercial building, there is an advantage that the shopper can purchase one's interested product among the products of a large number of brands after browsing these products at the same time, in cases where the shopper wants a particular product such as bags and shoes, for instance.

Further, along with the advantage for the shoppers, such centralized arrangement of the stores in the particular categories can lead to enhancement of an effect of attracting the shoppers, and accordingly, there is a significant advantage for the brand shop side as well. Moreover, a brand quality in terms of development of better products and offering of better services, for instance, can be improved according to the principles of competition among the brand shops themselves.

In another aspect of the store arrangement structure in the commercial building according to the present invention, the brand shops as the tenants in the commercial building can be also limited to stores that are sharing a particular theme, like brand shops that are specializing in products in particular districts, countries or well-known cities, for instance. However, even in such case, it is to be noted that any appropriate arrangement of the coffee shops and/or restaurants as described the above, for instance, shall not be precluded too.

In still another aspect of the store arrangement structure in the commercial building according to the present invention, the brand shops as the tenants in the commercial building may be also limited to brand shops that are almost equal to one another in the level of brand awareness. This is because, as for the commercial building where there are the brand shops that are greatly different from one another in the level of brand awareness, there may be cases where an imbalance of competitiveness among the brand shops themselves is likely to be caused, resulting in a concern for difficulty in leading to securement of profits in the commercial building as a whole.

If the brand shops being almost equal to one another in the level of brand awareness are provided in centralized arrangement, the brand quality in terms of development of better products and offering of better services, for instance, can be improved according to the principles of competition among the brand shops themselves. However, even in such case, it is to be noted that any appropriate arrangement of the coffee shops and/or restaurants as described the above, for instance, shall not be precluded too.

In contrast to the above, the present invention is also applicable even in cases where both of high-end brand shops with a high level of brand awareness and other brand shops with a low level of brand awareness are made to move into one commercial building in accordance with the advantage of each of these brand shops. By taking advantage of the high-end brand shop's ability to attract the shoppers, the brand shops with the low level of brand awareness may get a new business chance, and there may be also an opportunity to build a mutually cooperative relationship between the brand shops.

### EFFECTS OF THE INVENTION

To overcome such conventional problem that the ability to attract the shoppers gets worse as the distance from the main floor is increased because of the occurrence of gathering of the shoppers at the main floor that is in a more advantageous condition for store arrangement such as to ensure that a lot of well-known brand shops in the building are provided in centralized arrangement there, the present invention provides the store arrangement structure in the commercial building with which the secondary stores of each store are arranged on the main floor that is excellent in the ability to attract the shoppers, while the primary stores are provided in decentralized arrangement on the floors other than the main floor, thereby making it possible to increase the ability to attract the shoppers in the entire building, while restraining the shoppers from gathering at the main floor.

Each brand shop as the tenants in the commercial building is allowed to have the secondary store thereof such as to be arranged on the main floor in an equitable manner, and hence, the brand quality in terms of development of better products and offering of better services, for instance, can be improved according to the principles of competition in well-ordered fair dealing activities.

The imbalance of the ability to attract the shoppers in the building can be suppressed to achieve an increase of the efficiency and ability to attract the shoppers in the entire building, and hence, it is possible also for the building owner to secure higher profits stably.

With the store arrangement structure in the commercial building according to the present invention, this would result in that a most ideal space for making the brand names better known can be provided for the brand shops of start-up brands and/or other brands having been hard to catch up with the existing high-end brands, thereby making it possible to encourage the development of these start-up brands into high-quality brands or makers.

### BRIEF DESCRIPTION OF THE DRAWINGS

[FIG. 1] FIG. 1 conceptionally shows a store arrangement structure in a commercial building according to the present invention, FIG. 1(a) being a view showing one embodiment on the planar arrangement of secondary stores on a main floor, and FIG. 1(b) being a view showing one embodiment on the arrangement of primary stores in the entire building.
[FIG. 2] FIGS. 2(a) to 2(c) are conceptional views respectively showing embodiments on a pattern of arrangement of the secondary stores according to the present invention.
[FIG. 3] FIGS. 3(a) to 3(d) are perspective views respectively showing embodiments when ornamentation or display of an image or video image based on a specific theme is applied to a lower storied-side façade of the commercial building according to the present invention.
[FIG. 4] FIG. 4 is a view conceptionally showing the change of a rent of tenants on each floor in the case of application of the present invention.

### MODE FOR EMBODYING THE PRESENT INVENTION

Hereinafter will be described the present invention with reference to the attached drawings.

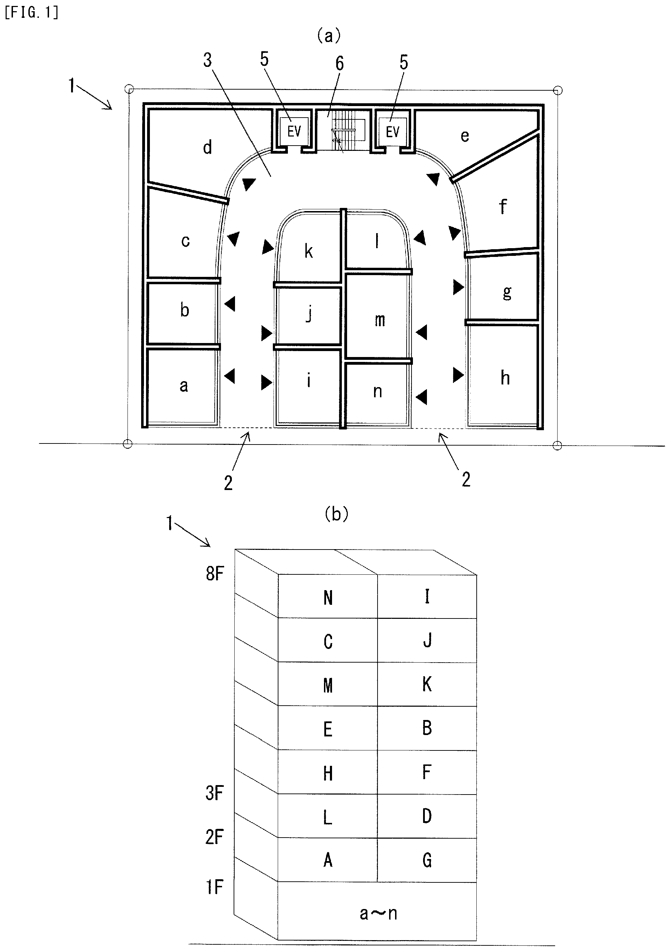

FIG. 1 conceptionally shows a store arrangement structure in a commercial building according to the present invention, FIG. 1(a) being a view showing one embodiment on the planar arrangement of secondary stores on a main floor of a building 1, and FIG. 1(b) being a view showing one embodiment on the arrangement of primary stores in the entire building 1.

In the embodiments, for instance, as shown in FIG. 1(a), secondary stores a to n of each brand shop as tenants in the building 1 are arranged on a main floor of the building, while primary stores A to N of each brand shop corresponding to the secondary stores a to n are arranged on the second to eighth floors thereof, provided that the first floor having front entrances 2 serving as entrances/exits of the building 1 is assumed to be the main floor.

Shoppers who come in from the front entrances 2 on the main floor can directly look around at the secondary stores a to n of each brand on the main floor along a passage 3. Therefore, if one shopper is interested in some product which is for sale at the secondary stores a to n, it may be possible for the shopper to purchase this product on the spot, and meanwhile, if one shopper wants to browse more products of that brand, it is made possible for the shopper to use an elevator 5 or stairs 6, for instance, from the main floor in order to visit the primary stores A to N of that brand on the upper floors for shopping thereat.

Namely, the shopper is allowed to shop around for the products of all the brands at one time on the first floor which is assumed to be the main floor, and also to do shopping in a wide spatial area while relaxedly enjoying a wide variety of well-stocked products whenever going up to each upper floor.

The secondary stores a to n are to function like an antenna shop or a branch shop mainly aimed at introduction on the primary stores A to N, and can improve conveniences for the customers such as being applicable to not only introduction on the primary stores A to N but also sales of some of the products being for sale at the primary stores A to N, within the limit of spatial allowance, contact with the primary stores A to N, or guidance to the primary stores A to N, for instance.

Further, a function as a showroom can be also imparted to the secondary stores a to n in such a manner as to pick out some kinds of products available as featured products from the products being for sale at the primary stores A to N on the upper floors of the building 1 in order to display these featured products in the secondary stores a to n. Moreover, the secondary stores are capable of allowing the customers attracted to the displayed product to be inspired for a visit to the primary stores A to N.

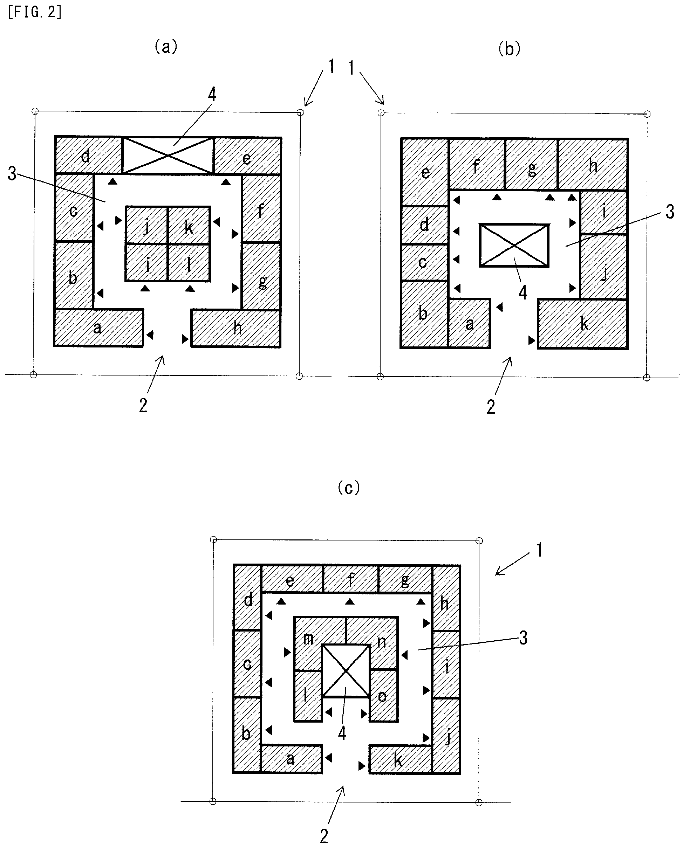

FIGS. 2(a) to 2(c) are conceptional views respectively showing embodiments on a pattern of arrangement of the secondary stores on the main floor. In these figures, portions with lower-case alphabetic characters added are respectively indicative of the partitioned sections of the secondary stores of each brand shop.

In one embodiment shown in FIG. 2(a), a core part 4 provided for installation of the elevator or stairs therein, for instance, is placed on the depth side of the front when viewed from the front entrance 2 on the main floor, wherein the secondary stores a to h are arranged at outer circumferential parts on both sides with the core part 4 interposed therebetween, and the secondary stores i to 1 are arranged at a central part across the passage 3. The primary stores corresponding to these secondary stores would be provided in decentralized arrangement on more than one floor other than the main floor.

In another embodiment shown in FIG. 2(b), the core part 4 provided for installation of the elevator or stairs therein, for instance, is placed at the central part of the main floor so as to extend in the vertical direction of the building 1, wherein the secondary stores a to k are arranged at the outer circumferential part of the main floor across the passage 3 with respect to the core part 4. The primary stores corresponding to these secondary stores would be provided in decentralized arrangement on more than one floor other than the main floor.

In still another embodiment shown in FIG. 2(c), the core part 4 provided for installation of the elevator or stairs therein, for instance, is placed at the central part of the main floor, wherein the secondary stores a to k are arranged at the outer circumferential part of the main floor, and the secondary stores 1 to o are further arranged at a location at which the core part 4 is surrounded, across the passage 3. The primary stores corresponding to these secondary stores would be provided in decentralized arrangement on more than one floor other than the main floor.

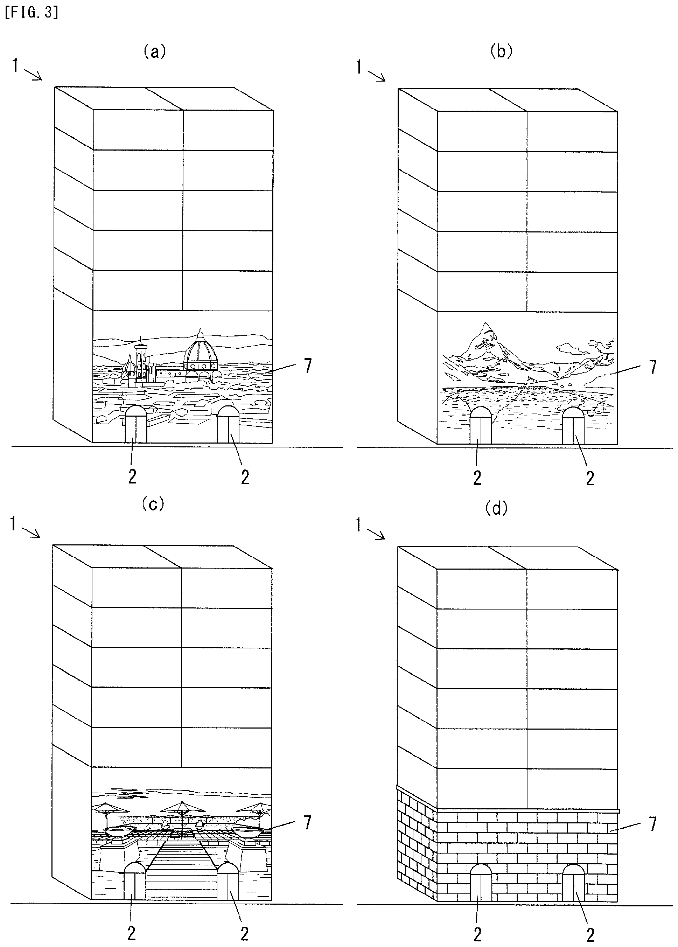

FIGS. 3(a) to 3(d) respectively show embodiments when ornamentation or display of an image or video image based on a specific theme is applied to a lower storied-side façade 7 (the design of a building front part) of the commercial building according to the present invention.

These embodiments are to achieve a shopper attraction effect obtained by improvements of impression from the perspective of the exterior design of the building, in which case, however, there may be still more possible measures such as to apply some design which is made based on the impression of the brand shops in the building or to give some video image for advertising of the brand shops.

FIG. 3(a) shows one embodiment when display of a photo or picture of European cityscape, for instance, is applied to the lower storied-side façade 7. As for the commercial building where there are European well-known brand shops, it is possible to apply design which is made based on brands of these brand shops. Further, display of a video image is also applicable to this façade part so as to give a scenery image of European cityscape and/or to make switching to other video images for advertising of the products of the brand shops.

FIG. 3(b) shows another embodiment when display of a scenery image of the Alps in Europe, for instance, is applied to the lower storied-side façade 7. Even in such case, it may be possible also to give the video image without being limited to the photo or picture.

FIG. 3(c) shows a still another embodiment when design which is made based on a resort scenery, for instance, is applied to the lower storied-side façade 7. As for the commercial building where there are a variety of brand shops of fashion brands and/or bag and shoes brands, for instance, the shopper's eagerness to purchase the products thereat can be increased to achieve the enhancement of the effect of attracting the shoppers by taking measures to give a video image showing that one couple wearing clothes from the brand in the building are walking at a smart pace in a resort, with a bag from the brand therein and also with shoes from the brand therein on.

FIG. 3(d) shows a still yet another embodiment when ornamentation capable of giving a deep and profound stone wall impression, for instance, is applied to the lower storied-side façade 7. This makes it possible to bring about the ambience of high-class shops of well-known brands.

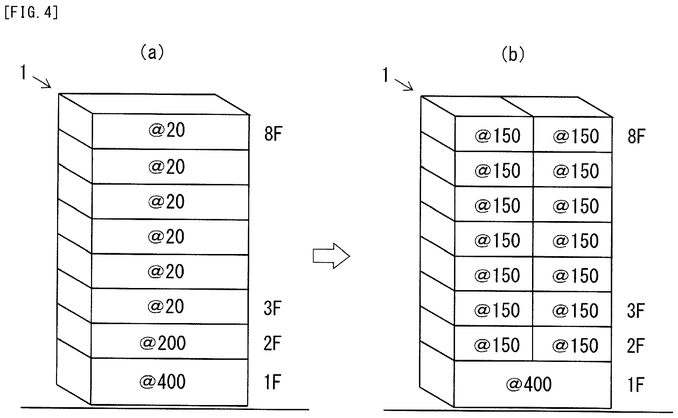

FIG. 4 is a view conceptionally showing the change of a rent of tenants on each floor in the case of application of the present invention. Referring to FIG. 4, the rent per unit area is indicated by @n in terms of a relative value.

In regards to the conventional form of store arrangement such that the tenants of well-known brands are occupying the main floor, and accordingly, the tenants of other brands have no choice but to be located on the floors other than the main floor, it is assumed, as shown in FIG. 4(a), for instance, that the rent per unit area for the first floor which is assumed to be the main floor and is easily accessible from a main street is as high as @400, whereas the rent per unit area for the second floor directly above the main floor is set to be @200 that is half as high as the rent per unit area for the first floor, and the rent per unit area for each of the third and more floors which are not advantageous in the aspects of accessibility and shopper attraction is set as low as @20 (wherein, for easy comparison, the present invention assumes the case where there is an extreme difference in the ability to attract the shoppers for each floor).

On the other hand, referring to FIG. 4(b) showing the case of application of the store arrangement structure in the commercial building according to the present invention, even if the rent per unit area for the main floor on which there are the secondary stores of each brand shop is as high as @400, it is made possible to keep the rent of each tenant low because of the fact that the condition of sharing the main floor with a large number of brand shops results in a reduction in the occupation area for each secondary store of the brand shop.

Thus, if the primary stores of each brand shop are arranged on the second and more floors, provided that the large number of brand shops are sharing the first floor assumed to be the main floor, it can be appreciated that the imbalance of locational superiority concerning the effect of attracting the shoppers is eliminated, and also that each of the second and more floors is allowed to obtain an approximately equalized condition because of the capability of achieving the cooperation of the primary stores with the secondary stores. For that reason, even if the rent per unit area for each of the second and more floors is set as high as @150, a sense of unfairness on the tenant side is less likely to be caused, and meanwhile, it is made possible for the commercial building owner to estimate higher profits than ever.

### EXPLANATION OF REFERENCE NUMERALS

1 ... Building, 2 ... Front entrance, 3 ... Passage, 4 ... Core part, 5 ... Elevator, 6 ... Stairs, 7 ... Façade

## Claims

1. A store arrangement structure in a commercial building, **characterized in that** in regards to more than one tenant in a commercial building with more than one floor, primary stores are respectively arranged in combination with secondary stores serving as branch shops aimed at introduction on the primary stores while being displaying or selling some of the products which are for sale at the primary stores, wherein said secondary stores are provided in centralized arrangement on a main floor having entrances/exits mainly for customers, while said primary stores are provided in decentralized arrangement on more than one floor of the commercial building.

2. The store arrangement structure in the commercial building according to claim 1, wherein said primary stores as said more than one tenant are all provided in decentralized arrangement on the floors other than said main floor.

3. The store arrangement structure in the commercial building according to claim 1, wherein said secondary stores as said more than one tenant are each provided with a contact means dedicated to contact with the primary stores corresponding to the relevant secondary stores or a guiding means dedicated to guidance to the primary stores corresponding to the relevant secondary stores.

4. The store arrangement structure in the commercial building according to claim 3, wherein said dedicated guiding means is a guiding means including an elevator access control system utilizing an IC card.

5. The store arrangement structure in the commercial building according to any one of claims 1 to 4, wherein the tenants in said commercial building are limited to stores that are specializing in products in one to three particular categories.

6. The store arrangement structure in the commercial building according to any one of claims 1 to 4, wherein the tenants in said commercial building are limited to stores that are sharing a specific theme.

7. The store arrangement structure in the commercial building according to any one of claims 1 to 4, wherein the tenants in said commercial building are limited to brand shops that are almost equal to one another in the level of brand awareness.
